(19) Europäisches Patentamt
European Patent Office
Office européen des brevets

(11) **EP 1 914 542 B1**

(12) **EUROPÄISCHE PATENTSCHRIFT**

(45) Veröffentlichungstag und Bekanntmachung des Hinweises auf die Patenterteilung:
**15.09.2010 Patentblatt 2010/37**

(51) Int Cl.:
***G01N 25/72*** *(2006.01)*

(21) Anmeldenummer: **06090196.4**

(22) Anmeldetag: **22.10.2006**

(54) **Verfahren und Vorrichtung zum Prüfen von Fügeverbindungen an Bauteilen auf innere Fehler und/ oder Oberflächenfehler mittels Thermografie**

Method and device for checking joint connections on components for internal faults and/or surface faults by means of thermography

Procédé et dispositif destinés à la vérification des erreurs internes et/ou superficielles des liaisons bout à bout sur des composants par thermographie

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**23.04.2008 Patentblatt 2008/17**

(73) Patentinhaber: **INPRO Innovationsgesellschaft für fortgeschrittene Produktionssysteme in der Fahrzeugindustrie mbH**
**10587 Berlin (DE)**

(72) Erfinder:
• **Strohmeyer, Robert,**
**c/o INPRO ... GmbH**
**10587 Berlin (DE)**

• **Plath, Sascha**
**10587 Berlin (DE)**

(74) Vertreter: **Hoffmann, Klaus-Dieter**
**Kurfürstendamm 40-41**
**10719 Berlin (DE)**

(56) Entgegenhaltungen:
**EP-A- 0 872 725       WO-A-2005/005972**
**DE-A1- 19 838 858**

• **JON L. GROSSMAN: "Advanced Techniques in IR Thermography" HI-TECH INSPECTION SERVICES, COMPANY PUBLICATION, 2005, Seiten 1-20, XP002436999**

**Beschreibung**

Die Erfindung betrifft ein Verfahren zum Prüfen von Fügeverbindungen an Bauteilen auf innere Fehler und/ oder Oberflächenfehler mittels Thermografie, bei dem das Bauteil für die Thermografie angeregt und vor einer Bildaufnahme der bei der Anregung entstehenden Oberflächenverzerrungen des Bauteils mittels eines impulsförmigen Druckgasstroms abgekühlt wird und anschließend die Bildauswertung rechnermäßig erfolgt.

Es ist bekannt, zur zerstörungsfreien Prüfung von Bauteilen auf Oberflächen und/oder innere Fehler mittels Thermografie als konvektive Anregung einen Warm- oder Kaltluftstrom auf die Oberfläche des Bauteils zu lenken (DE 198 38 858 A1). Bei einer derartigen konvektiven Anregung mit Kaltluft z.B. mittels eines Wirbelrohres ist der Emissionsgrad auf der Bauteiloberfläche auf der Anregungsseite nahezu vernachlässigbar und die Energie wird gleichmäßig in das Bauteil eingekoppelt, so daß sich eine homogene Temperaturverteilung ergibt. Als Nachteil erweist sich jedoch eine geringer Abkühlgeschwindigkeit auf der anregungsseitigen Bauteiloberfläche, so dass auf Grund langer Anregungszeiten ein starker lateraler Wärmefluss im Bauteil auftritt. Hierdurch ist eine Detektion von tiefliegenden oder kleinen Fehlern im Bauteil bzw. von Verbindungsflächen erschwert

Aus der WO 2005/005972 A ist weiterhin ein Verfahren zur Fehlerprüfung an Bauteilen mittels Thermografie bekannt, bei dem zur Anregung für die Thermografie eine induktive Heiztechnik verwendet wird, die zur Verbesserung der Meßergebnisse mit einer aktiven Kühlung der Oberfläche durch Konvektion wie z.B. Druckluft oder gekühlte Druckluft kombiniert wird. Hierbei erfolgt die Kühlung mittels eines impulsförmigen Luftstroms, unmittelbar im Anschluß an die impulsförmige Aufheizung durch Anblasen der Oberfläche und vor der Bildaufnahme der Thermografie.

Der Erfindung liegt die Aufgabe zu Grunde, ein Verfahren des eingangs erwähnten Art zur Verfügung zu stellen, mit dem zur Minimierung des lateralen Wärmeflusses kurze Anregungszeiten wie z.B. bei eine Blitzlampenanregung für die Thermografie möglich sind und gleichzeitig eine homogene Energieeinbringung zu erreichen ist.

Diese Aufgabe wird erfindungsgemäß mit einem gattungsgemäßen Verfahren dadurch gelöst, dass das Druckgas in einem geschlossenen, mit einem Auslassventil versehenen Druckbehälter komprimiert bereitgestellt und die Bauteiloberfläche durch Öffnen des Auslassventils des Druckbehälters schlagartig von dem impulsförmigen Strom des komprimierten Druckgases beaufschlagt wird, wobei das Bauteil durch die von der schlagartigen Entspannung des komprimierten Druckgasstroms bedingte Abkühlung augenblicklich abgekühlt und dadurch zugleich für die Thermografie angeregt wird.

Vorzugsweise wird als gasförmiges Medium Luft gewählt, wobei die Luft in einem Speichervolumen von 1 Liter bis zu einem Druck von 8 bar komprimiert wird.

Bevorzugt werden die Anregungszeit, d.h. die Zeit, in der Druckluft aus dem Druckbehälter ausströmt, im Bereich von 0,5 sec bis 1,0 sec und der Abstand der Mündung der Düse zur Oberfläche des zu prüfenden Bauteils bei einem Düsendurchmesser von 5 mm im Bereich von 3 mm bis 10 mm gewählt.

Die Erfindung betrifft auch eine Vorrichtung zur Durchführung des zuvor beschriebenen Verfahrens, mit einer Druckluftzufuhr, einer Düse, von der ein Druckluftimpuls auf die Bauteiloberfläche zu deren Kühlung zur richten ist, mit einer auf die Bauteiloberfläche ausgerichteten Wärmebildkamera zur Erfassung von entstehenden Verzerrungen des Oberflächentemperaturfeldes des Bauteils und mit einem mit der Wärmebildkamera verbundenen Rechner zur Bildauswertung. Diese Vorrichtung ist erfindungsgemäß gekennzeichnet durch einen mit der Druckluftzufuhr verbundenen und über ein Einlaßventil mit Druckluft gefüllten Druckbehälter, der über ein Auslaßventil mit der Düse verbunden ist, von der im geringen Abstand von der Oberfläche des zu prüfenden Bauteils bei Öffnung des Auslassventils des geschlossenen Druckbehälters der Druckluftimpuls expansionsgekühlt abgekühlt schlagartig auf die Bauteiloberfläche als Anregung für die Thermografie zu richten ist.

Das erfindungsgemäße Verfahren sorgt für eine schnelle Temperaturänderung auf der Bauteiloberfläche und somit für derart kurze Anregungszeiten wie bei einer Blitzlampenanregung, so daß ein lateraler Wärmefluss minimiert wird. Außerdem wird eine homogene Energieeinbringung in das Bauteil erreicht. Mit dem erfindungsgemäßen Verfahren sind Fügeverbindungen sicher zu prüfen sowie tiefliegende oder kleine Fehler im Bauteil oder an Verbindungsflächen gut zu detektieren.

Eine bevorzugte Ausführungsform der erfindungsgemäßen Vorrichtung wird nun anhand der einzigen Figur der Zeichnung beschrieben, die einen schematischen Aufbau der Vorrichtung zeigt. Von einer Druckluftzufuhr 1 zugeführte Druckluft wird durch Öffnen eines Einlaßventils 2 in einen Druckbehälter 3 mit einem Speichervolumen von 1 Liter geleitet und bis zu einem Druck $p_{Druckhhälter}$ von 8 bar komprimiert. Nach dem Befüllvorgang wird das Einlaßventil 2 geschlossen. Durch Öffnen eines Auslaßventils 4 wird das Speichervolumen des Druckbehälters 3 schlagartig entladen, wobei ein von einer mit dem Auslaßventil 4 verbundenen Düse 5 ein expansionsbedingter kalter Druckluftimpuls 6 auf die Oberfläche 7 des Bauteils 8 gerichtet wird. Zugleich wird eine auf die Bauteiloberfläche 7 ausgerichtete Kamera 9 gestartet, bei der es sich im gegebenen Fall um eine Halbleiterkamera handelt, die mit einem Rechner 10 zur Bildauswertung verbunden ist. Die Kälte durchdringt das Bauteil 8 an den in der Figur ersichtlichen Schweißpunkten 11 und wird auf der gegenüberliegenden Seite der Bauteiloberfläche 7 von der Kamera 9 detektiert. Alternativ kann die Kamera 9 auch auf die Seite der Bauteiloberfläche 7 ausgerichtet werden, auf der der Druckluftimpuls 6 auf die Bauteiloberfläche

**EP 1 914 542 B1**

7 trifft.

Die Ausströmtemperatur an der Düse 5 berechnet sich zu:

$$T = T_{Behälter}\left\{1 - \varphi^2 \cdot \left[1 - \left(\frac{p_{Behälter}}{p_{Umgebung}}\right)_{kritisch}^{\frac{\kappa-1}{\kappa}}\right]\right\}$$

$\varphi$ = Geschwindigkeitsbeiwert (0,89)
$p_{Behalter}$ = Behälterinnendruck (8 bar)
$P_{Umgebung}$ = Umgebungsdruck (1 bar)
$\kappa$ = Isentropenexponent (für Luft = 1,4)

Theoretisch ist eine Ausströmtemperatur von -6° C zu erreichen. Diese Temperatur reicht aus, um mit der Halbleiterkamera 9 aussagekräftige Bilder aufzunehmen.

**Liste der Bezugszeichen:**

1    Druckluftzufuhr

2    Einlaßventil

3    Druckbehälter

4    Auslaßventil

5    Düse

6    Druckluftimpuls

7    Bauteiloberfläche

8    Bauteil

9    Halbleiterkamera

10    Rechner

11    Schweißstellen

**Patentansprüche**

1.  Verfahren zum. Prüfen von Fügeverbindungen an Bauteilen auf innere Fehler und/oder Oberflächenfehler mittels Thermografie, bei dem das Bauteil (8) für die Thermografie angeregt und vor einer Bildaufnahme der bei der Anregung entstehenden Oberflächenverzerrungen des Bauteils mittels eines impulsförmigen Druckgasstroms abgekühlt wird und anschließend die Bildauswertung rechnermäßig erfolgt, **dadurch gekennzeichnet, daß** das Druckgas über ein Einlassventil (Z) in einem Druckbehälter (3) komprimiert bereitgestellt und die Bauteiloberfläche (7) durch Öffnen eines Auslaßventils (4) des Druckbehälters schlagartig von dem impulsförmigen Strom des komprimierten Druckgases beaufschlagt wird, wobei das Bauteil (8) durch die von der schlagartige Entspannung des komprimierten Druckgasstroms bedingten Abkühlung augenblicklich abgekühlt und **dadurch** zugleich für die Thermografie angeregt wird.

2.  Verfahren nach Anspruch 1, **dadurch gekennzeichnet, daß** als gasförmiges Medium Luft gewählt wird.

3

**3.** Verfahren nach Anspruch 1 und 2, **dadurch gekennzeichnet, daß** die Druckluft in einem Speichervolumen von 1 Liter bis zu einem Druck von 8 bar komprimiert wird.

**4.** Verfahren nach einem der vorhergehenden Ansprüche, **dadurch gekennzeichnet, daß** die Anregungszeit im Bereich von 0,5 Sekunden bis 1,0 Sekunden gewählt wird.

**5.** Verfahren nach einem der vorhergehenden Ansprüche, **dadurch gekennzeichnet, daß** der Abstand der Mündung der Düse zur Oberfläche des zu prüfenden Bauteils bei einem Düsendurchmesser von 5 mm im Bereich von 3 mm bis 10 mm gewählt wird.

**6.** Vorrichtung zur Durchführung des Verfahrens nach Anspruch 1 bis 3, mit einer Druckluftzufuhr (1), einer Düse (5), von der ein Druckluftimpuls auf die Bauteiloberfläche (7) zu deren Kühlung zu richten ist, mit einer auf die Bautelloberfläche (7) ausgerichteten Wärmebildkamera (9) zur Erfassung von entstehenden Verzerrungen des Oberflächentemperaturfeldes des Bauteils (8) und mit einem mit der Wärmebildkamera (9) verbundenen Rechner (10) zur Bildauswertung, **gekennzeichnet durch** einen mit der Druckluftzufuhr (1) verbundenen und über ein Einlaßventil (2) mit Druckluft gefüllten Druckbehälter (3), der über ein Auslassventil (4) mit der Düse (5) verbunden ist, von der im geringen Abstand von der Oberfläche (7) des zu prüfenden Bauteils (8) bei Öffnung des Auslaßventils (4) des geschlossenen Druckbehälters (3) der Druckluftimpuls expansionsbedingt abgekühlt schlagartig auf die Bauteiloberfläche (7) als Anregung für die Thermografie zu richten ist.

**7.** Vorrichtung nach Anspruch 6, **dadurch gekennzeichnet, daß** bei einem Düsendurchmesser von 5 mm der Abstand der Mündung der Düse (5) zur Oberfläche (7) des zu prüfenden Bauteils (8) im Bereich von 3 mm bis 10 mm liegt.

**Claims**

**1.** Method for checking joins in components for inner and/or surface faults by means of thermography, in which the component (8) is excited for the thermography and is cooled by means of a pulse-like stream of pressurised gas before an image is taken of the surface distortions of the component which arise during the excitation, and then the image is evaluated by computer, **characterised in that** the pressurised gas is provided in a compressed manner via an inlet valve (2) in a pressurised container (3), and the component surface (7) is loaded suddenly by the pulse-like stream of the compressed pressurised gas by an outlet valve (4) of the pressurised container opening, wherein the component (8) is rapidly cooled by the cooling caused by the sudden expansion of the compressed pressurised gas stream and is thereby excited for the thermography at the same time.

**2.** Method according to Claim 1, **characterised in that** air is selected as the gaseous medium.

**3.** Method according to Claim 1 and 2, **characterised in that** the pressurised air is compressed in a storage volume of 1 litre to a pressure of 8 bar.

**4.** Method according to one of the preceding claims, **characterised in that** the excitation time is selected to be in the range from 0.5 seconds to 1.0 seconds.

**5.** Method according to one of the preceding claims, **characterised in that** the distance of the opening of the nozzle from the surface of the component to be tested is selected to be in the range from 3 mm to 10 mm with a nozzle diameter of 5 mm.

**6.** Device for carrying out the method according to Claim 1 to 3, with a pressurised air feed (1), a nozzle (5), from which a pressurised air pulse is to be directed at the component surface (7) in order to cool it, with a thermal imaging camera (9) which is pointed towards the component surface (7) in order to detect any distortions of the surface temperature field of the component (8) which arise, and with a computer (10) which is connected to the thermal imaging camera (9) for evaluating the image, **characterised by** a pressurised container (3) which is connected to the pressurised air feed (1), filled with pressurised air via an inlet valve (2) and is connected via an outlet valve (4) to the nozzle (5), from which at a short distance from the surface (7) of the component (8) to be tested the pressurised air pulse is to be directed at the component surface (7) suddenly and in a cooled manner owing to the expansion when the outlet valve (4) of the closed pressurised container (3) is opened, as the excitation for the thermography.

**7.** Device according to Claim 6, **characterised in that** the distance of the opening of the nozzle (5) from the surface (7) of the component (8) to be tested is in the range from 3 mm to 10 mm with a nozzle diameter of 5 mm.

**Revendications**

1. Procédé pour le contrôle de raccords d'assemblage sur des pièces de construction, en vue de défauts internes et/ou de défauts de surface, au moyen de la thermographie, dans lequel la pièce de construction (8) est activée pour la thermographie, et refroidie au moyen d'un flux de gaz comprimé sous forme d'impulsions, avant une capture d'image des déformations de surface de la pièce de construction qui apparaissent pendant l'activation, et dans lequel l'image est ensuite évaluée par calcul, **caractérisé en ce que** le gaz comprimé est mis à disposition sous forme comprimée dans un récipient sous pression (3), par le biais d'une soupape d'admission (2), et la surface (7) de la pièce de construction est sollicitée brusquement par le flux sous forme d'impulsions du gaz comprimé, suite à l'ouverture d'une soupape d'évacuation (4) du récipient sous pression, la pièce de construction (8) étant momentanément refroidie par le refroidissement conditionné par la détente soudaine du flux de gaz comprimé, et étant ainsi dans le même temps activée en vue de la thermographie.

2. Procédé selon la revendication 1, **caractérisé en ce que** de l'air est choisi comme milieu gazeux.

3. Procédé selon les revendications 1 et 2, **caractérisé en ce que** l'air comprimé est comprimé dans un volume de stockage de 1 litre, jusqu'à une pression de 8 bar.

4. Procédé selon l'une des revendications précédentes, **caractérisé en ce que** le temps d'activation est choisi dans une plage entre 0,5 seconde et 1,0 seconde.

5. Procédé selon l'une des revendications précédentes, **caractérisé en ce que** l'espacement entre l'embouchure de la buse et la surface de la pièce de construction à contrôler est choisi dans la plage entre 3 mm et 10 mm, pour un diamètre de 5 mm.

6. Dispositif pour la mise en oeuvre du procédé selon les revendications 1 à 3, avec une alimentation en air comprimé (1), une buse (5), par laquelle une impulsion d'air comprimé est orientée vers la surface (7) de la pièce de construction en vue du refroidissement de celle-ci, avec une caméra à image de rayonnement thermique (9) orientée vers la surface (7) de la pièce de construction, pour la détection de distorsions apparaissant dans le champ thermique de surface de la pièce de construction (8), et avec un calculateur (10) relié à la caméra à image de rayonnement thermique (9) pour l'évaluation de l'image, **caractérisé par** un récipient sous pression (3) relié à l'alimentation en air comprimé (1) et rempli d'air comprimé par le biais de la soupape d'admission (2), et relié à la buse (5) par le biais de la soupape d'évacuation (4), buse par laquelle l'impulsion d'air comprimé refroidi en fonction de l'expansion est orientée par à-coups vers la surface (7) de la pièce de construction, à une petite distance de la surface (7) de la pièce de construction (8) à contrôler, en vue de l'activation pour la thermographie, lors de l'ouverture de la soupape d'évacuation (4) du récipient sous pression (3) fermé.

7. Dispositif selon la revendication 6, **caractérisé en ce qu'**avec un diamètre de 5 mm, l'espacement entre l'embouchure de la buse (5) et la surface (7) de la pièce de construction (8) à contrôler est compris entre 3 mm et 10 mm.

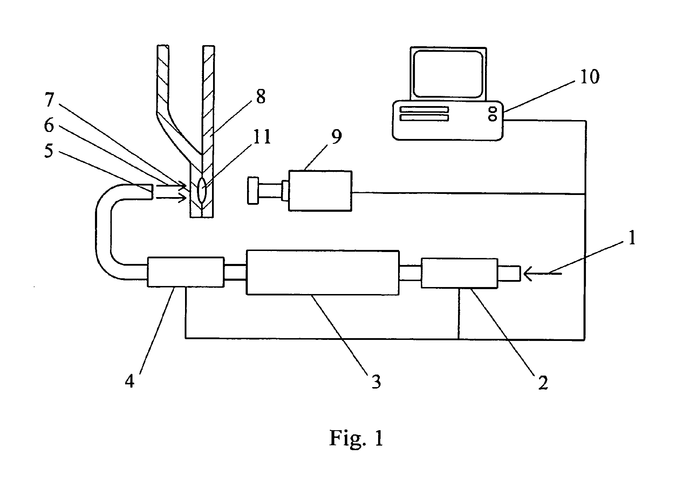

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19838858 A1

- WO 2005005972 A